# EUROPÄISCHE PATENTSCHRIFT

(11) **EP 3 898 466 B1**
(45) Veröffentlichungstag und Bekanntmachung des Hinweises auf die Patenterteilung: **03.12.2025**
(21) Anmeldenummer: 19717810.6
(22) Anmeldetag: 09.04.2019
(51) Int. Cl.: B65G 37/00, A22C 25/08

(54) **FÖRDEREINHEIT, AUSGEBILDET UND EINGERICHTET ZUM AUTOMATISCHEN FÖRDERN VON FILETARTIGEN FLEISCHPRODUKTEN, INSBESONDERE VON FISCHFILETS, SOWIE VERFAHREN HIERZU**
CONVEYING UNIT DESIGNED AND CONFIGURED FOR AUTOMATICALLY CONVEYING FILLET-LIKE MEAT PRODUCTS, IN PARTICULAR FISH FILLETS, AND METHOD RELATING TO SAME
UNITÉ D'ACHEMINEMENT, CONFIGURÉE ET ADAPTÉE POUR L'ACHEMINEMENT AUTOMATIQUE DE PRODUITS CAMÉS DE TYPE FILETS, NOTAMMENT DE FILETS DE POISSON, ET PROCÉDÉ ASSOCIÉ

(43) Veröffentlichungstag der Anmeldung: 27.10.2021
(73) Patentinhaber: NORDISCHER MASCHINENBAU RUD. BAADER GMBH + CO KG, 23560 Lübeck (DE)
(72) Erfinder: RUSKO, Torsten, 23923 Herrnburg (DE)
(74) Vertreter: Stork Bamberger Patentanwälte PartmbB
(86) Internationale Anmeldenummer: PCT/EP2019/058970
(87) Internationale Veröffentlichungsnummer: WO 2020/207567

(56) Entgegenhaltungen:
- DE-A1- 2 939 625

## Beschreibung

### Beschreibung

Die Erfindung betrifft eine Fördereinheit, ausgebildet und eingerichtet zum automatischen Fördern von filetartigen Fleischprodukten, insbesondere von Fischfilets, mit einem ersten, mittels eines Antriebsmittels umlaufend angetriebenen Förderelement und einem in Transportrichtung T der zu fördernden Fleischprodukte dem ersten Förderelement nachgeordneten zweiten, mittels eines Antriebsmittels umlaufend angetriebenen Förderelement, wobei die beiden Förderelemente einen durchgängigen Transportpfad bilden, entlang dem unterschiedliche Bearbeitungsstationen angeordnet sein können.

Die Erfindung betrifft des Weiteren ein Verfahren zum automatischen Fördern von filetartigen Fleischprodukten, insbesondere von Fischfilets, umfassend die Schritte: Transportieren der Fleischprodukte mittels eines ersten Förderelementes in Transportrichtung T entlang eines Transportpfads, Übergeben der Fleischprodukte an ein zweites Förderelement in einem Übergangsbereich, und Transportieren der Fleischprodukte mittels des zweiten Förderelementes in Transportrichtung T entlang des Transportpfads.

Solche Fördereinheiten und Verfahren kommen in der Fleisch verarbeitenden Industrie zum Einsatz, insbesondere bei der Verarbeitung bzw. Bearbeitung von Fischfilets, um die zu bearbeitenden, filetartigen Fleischprodukte entlang des Transportpfads in einer auf die bzw. an die jeweilige Bearbeitungsstation angepassten Weise zu transportieren. Als filetartige Fleischprodukte werden bei Fischen vom Grätengerüst und insbesondere auch von der Mittelgräte befreite Produkte bezeichnet, die eine im Verhältnis zu ihrer Breite und Länge geringere Höhe aufweisen. Entsprechendes gilt für Fleischprodukte anderer Tierarten.

Bei der Verarbeitung von Thunfisch und vergleichbaren Spezies, die Langdistanz-Wanderungen durchführen und entsprechend eine besondere Muskelstruktur aufweisen, ist entsprechend auf die besonderen Gegebenheiten der Muskelstruktur Rücksicht zu nehmen. Am Beispiel des Thunfisches weisen die vom Grätengerüst und insbesondere von der Hauptgräte/Mittelgräte gelösten Fischfilets eine inhomogene Muskelstruktur auf. Das bedeutet, dass unterschiedliche Fleisch- bzw. Muskelanteile existieren. Neben dem "normalen" Muskelfleisch, das üblicherweise hell ist, weisen die Fischfilets ausgehend von dem Bereich der (entfernten) Mittelgräte in Richtung der Hautseite einen Bereich aus dunklem Muskelfleisch auf. Das dunkle Muskelfleisch, das so genannte Rotfleisch, ist geschmacklich von minderer Qualität, so dass es möglichst vollständig zu entfernen ist.

Der Bereich der Mittelgräte teilt das Fischfilet imaginär in ein rückenseitiges Teilfilet und ein bauchseitiges Teilfilet. Anders ausgedrückt wird der Bereich des Fischfilets, der sich ausgehend von der Mittelgräte nach oben - in Richtung der Rückenflossen - erstreckt, als rückenseitiges Teilfilet bezeichnet, während der Bereich des Fischfilets, der sich ausgehend von der Mittelgräte nach unten - in Richtung der Bauchhöhle - erstreckt, als bauchseitiges Teilfilet bezeichnet. Mit dem Begriff Fischfilet sind nicht nur solche Produkte bezeichnet, die überhaupt keine Gräten mehr haben, sondern insbesondere auch solche Produkte, bei denen zumindest die Mittelgräte entfernt ist, so dass der Streifen aus Rotfleisch auf der der Hautseite abgewandten Seite freiliegend ist. Die Verarbeitung und der Transport der Fischfilets erfolgen entsprechend mit der Hautseite nach unten.

Die Ausbreitung des Rotfleisches, das auch als "dark meat" bezeichnet wird, innerhalb des Fischfilets erlaubt es allerdings nicht, das Entfernen mit einem einzigen Schnitt an einer Bearbeitungsstation auszuführen. Die Ausbreitung des Rotfleisches weicht nämlich von einer klassischen V-Form ab und variiert von Fischfilet zu Fischfilet. Entsprechend führt ein einfacher V-Schnitt entweder dazu, dass noch Rotfleisch im Fischfilet verbleibt, oder es wird neben dem Rotfleisch auch noch helles Muskelfleisch entfernt. Das Entfernen des Rotfleisches muss daher in mehreren Schritten mit mindestens zwei in Transportrichtung T hintereinander angeordneten Schneidvorrichtungen erfolgen. Um die zu bearbeitenden Fischfilets von Bearbeitungsstation zu Bearbeitungsstation zu bewegen, bedarf es einer Fördereinheit.

Üblicherweise sind bei bekannten Fördereinheiten zwei oder mehr umlaufend angetriebene Transportbänder hintereinander angeordnet, um die zu bearbeitenden Fleischprodukte von Bearbeitungsstation zu Bearbeitungsstation, also am Beispiel der Entfernung von Rotfleisch aus Thunfischfilets von Schneidvorrichtung zu Schneidvorrichtung, zu transportieren. Dabei liegen die filetartigen Fleischprodukte flach auf den jeweiligen Transportbändern. Am Beispiel der Entfernung des Rotfleisches aus dem Fischfilet führt dies dazu, dass jedes Fischfilet auf beiden Transportbändern in gleicher Positionierung in Bezug auf die oberhalb der Transportbänder angeordneten Bearbeitungsstationen/Schneidvorrichtungen angeordnet ist. Dadurch ergeben sich identische Schnittpositionen, die dazu führen, dass nur identische Bereiche im Fischfilet geschnitten werden können. Um bei identischer Lage/Position der Fischfilets auf den Transportbändern unterschiedliche Bereiche am Fischfilet schneiden zu können, müssten die Bearbeitungsstationen bezüglich ihrer Bewegung im Raum aufwendig konstruiert und gesteuert werden.

Gerade bei der Entfernung von Rotfleischstreifen aus Thunfischfilets existieren jedoch aufgrund der speziellen Muskelstruktur Bereiche im Fischfilet, die für Bearbeitungsstationen nur schwer oder gar nicht erreichbar sind. Am Beispiel der Entfernung des Rotfleisches aus Thunfischfilets bleiben daher Bereiche des Rotfleisches, die beim Transport auf herkömmlichen Transportbändern von den Bearbeitungsstationen/Schneidvorrichtungen nicht erreicht werden können. Anders ausgedrückt ermöglichen die bekannten Fördereinheiten nur ein standardisiertes und entlang des Transportpfads für alle Bearbeitungsstationen gleiches Positionieren der zu bearbeitenden Fleischprodukte in Bezug auf Bearbeitungsstation entlang des Transportpfads.

DE 29 39 625 A1 offenbart eine Fördereinheit, ausgebildet und eingerichtet zum automatischen Fördern von Fischfilets mit einem ersten, mittels eines Antriebsmittels umlaufend angetriebenen Förderelement und einem in Transportrichtung der zu fördernden Fischfilets dem ersten Förderelement nachgeordneten zweiten, mittels eines Antriebsmittels umlaufend angetriebenen Förderelement, wobei die beiden Förderelemente einen durchgängigen Transportpfad bilden, wobei das erste Förderelement als ein Doppelband mit einem mittig und parallel zur Transportrichtung verlaufenden Spalt ausgebildet ist, während das zweite Förderelement als Segmentkette ausgebildet ist, wobei einige Segmente der Segmentkette im Querschnitt dreieckig sind.

Der Erfindung liegt somit die Aufgabe zugrunde, eine einfache Fördereinheit zu schaffen, die ein an die jeweilige Bearbeitungsstation angepasstes Positionieren der zu verarbeitenden Fleischprodukte gewährleistet. Der Erfindung liegt weiterhin die Aufgabe zugrunde, ein entsprechendes Verfahren zu schaffen.

Diese Aufgabe wird durch eine Fördereinheit mit den eingangs genannten Merkmalen dadurch gelöst, dass das erste Förderelement als ein Doppelband mit einem mittig und parallel zur Transportrichtung T verlaufenden Spalt ausgebildet ist, während das zweite Förderelement als eine im Querschnitt dreieckförmige Segmentkette ausgebildet ist. Mit dieser erfindungsgemäßen Ausgestaltung der Fördereinheit ist diese an die jeweilige Bearbeitungsstation angepasst, derart, dass die filetartigen Fleischprodukte jeweils in einer optimalen Lage/Position zur Bearbeitungsstation platziert sind. Am Beispiel einer Fördereinheit zum automatischen Fördern von Thunfischfilets gewährleistet das Doppelband als erstes Förderelement ein flaches Positionieren/Platzieren der Thunfischfilets z.B. auf ihrer Hautseite, um z.B. einen ersten mittleren, zentralen Teilstreifen des Rotfleisches aus dem Thunfischfilet schneiden zu können. Die im Querschnitt dreieckförmige Segmentkette als zweites Förderelement stellt sicher, dass die Thunfischfilets nicht nur kontinuierlich entlang des Transportpfads transportiert werden, sondern bedingt durch die Formgebung der Segmentkette in einer aufgeklappten Position liegen, um z.B. bauchseitige und/oder rückenseitige Teilstreifen des Rotfleisches aus dem Thunfischfilet schneiden zu können. Die im Querschnitt dreieckförmige Segmentkette führt dazu, dass die Teilfilets beim Verlassen des Doppelbandes alleine durch Schwerkraft zur Seite und nach unten klappen, derart, dass Bereiche des Rotfleischstreifens, die auf dem Doppelband noch einander zugekehrt waren, auf der Segmentkette nunmehr nach oben bzw. zumindest schräg nach oben weisen. Die Fördereinheit ermöglicht somit ein unterschiedliches und an unterschiedliche Bearbeitungsstationen angepasstes Positionieren der Thunfischfilets. Einfach ausgedrückt werden durch die Fördereinheit mittels der beiden unterschiedlichen Förderelemente unterschiedliche Bereiche des Fleischproduktes in Richtung der oberhalb der Fördereinheit platzierten Bearbeitungsstationen präsentiert, so dass die Bearbeitungsstationen mit verschiedenen Bereichen des zu bearbeitenden Fleischproduktes in verschiedenen Ebenen in Eingriff bringbar sind.

Eine bevorzugte Weiterbildung ist dadurch gekennzeichnet, dass sich das Doppelband und die Segmentkette in einem Übergangsbereich überlappen, derart, dass die zu transportierenden Fleischprodukte temporär zeitglich mit beiden Förderelementen in Kontakt stehen. Damit wird eine sichere Übergabe der Fleischprodukte sichergestellt. Überlappen bedeutet in diesem Zusammenhang, dass sich der Ausgang des ersten Förderelementes in Transportrichtung T hinter dem Eingangsbereich des zweiten Förderelementes befindet.

Vorteilhafterweise bilden das Doppelband und die Segmentkette in Transportrichtung T eine im Wesentlichen horizontal verlaufende, durchgängige Fördereinheit, wobei die Segmentkette zur Übernahme der zu transportierenden Fleischprodukte vom Doppelband mindestens im Übergangsbereich vom Doppelband zur Segmentkette von unten durch den Spalt in das Doppelband greift. In dem Übergangsbereich hat das Fleischprodukt somit Kontakt zum Doppelband einerseits und zur Segmentkette andererseits. Damit ist eine kontinuierliche Förderung der Fleischprodukte entlang des gesamten Transportpfads gewährleistet.

Eine bevorzugte Ausführungsform der Fördereinheit ist dadurch gekennzeichnet, dass das Doppelband zwei beabstandet zueinander angeordnete Teilbänder umfasst, die jeweils ein Transporttrum und eine Rückführtrum aufweisen, wobei die beiden Transporttrums mit ihrer jeweils nach oben weisenden Transportseite eine durchgängig ebene und horizontale Transportfläche bilden. Damit ermöglicht das erste Förderelement ein ebenes Positionieren der filetartigen Fleischprodukte, die am Beispiel des Thunfischfilets flach z.B. mit ihrer Hautseite auf den Transporttrums liegen. Dadurch kann z.B. mit einer ersten Bearbeitungsstation ein erster Schnitt in die Tiefe in Richtung Hautseite erfolgen, um den mittleren zentralen Teilstreifen des Rotfleisches aus dem Thunfischfilet zu schneiden.

Eine bevorzugte Weiterbildung zeichnet sich dadurch aus, dass die Segmentkette einen Transporttrum und einen Rückführtrum umfasst und aus einer Vielzahl einzelner Segmente gebildet ist, wobei jedes Segment einen Grundabschnitt und einen dachförmigen Stützabschnitt aufweist, so dass die Segmentkette mit dem Transporttrum ausgehend von einer Spitze der dachförmigen Stützabschnitte eine abgewinkelte Transportfläche mit zu beiden Seiten der Segmentkette seitlich und nach unten abfallenden Transportteilflächen bildet. Damit ermöglicht das zweite Förderelement ein Positionieren der filetartigen Fleischprodukte in aufgefalteter bzw. aufgeklappter Stellung, derart, dass die Teilfilets, also das bauchseitige und das rückenseitige Teilfilet, immer noch auf der Hautseite liegend zu beiden Seiten der Segmentkette herabhängen. Anders ausgedrückt bildet die Segmentkette mit ihren Segmenten eine auf dem Kopf stehende V-Form, so dass die in ihrer Längserstreckung vorzugsweise mittig auf der Segmentkette liegenden Fleischprodukte mit ihren Teilfilets zu beiden Seiten nach unten hängen. Dadurch weisen bauchseitige und rückenseitige Teilstreifen des Rotfleisches nach oben, so dass ein zweiter und/oder ein dritter Schnitt überwiegend in den Bauchbereich bzw. in den Rückenbereich, quasi parallel zur Hautseite, ausgeführt werden können, um die bauchseitigen bzw. rückenseitigen Teilstreifen des Rotfleisches aus dem Thunfischfilet zu schneiden.

Vorteilhafterweise sind der Grundabschnitt und der Stützabschnitt einstückig miteinander verbunden, wobei die Stützabschnitte im Transporttrum nach oben in Richtung des Spaltes des Doppelbandes weisen und mit ihrer Spitze mindestens teilweise durch den Spalt über die durch das Doppelband aufgespannte Ebene, also die Transportfläche hinausragen. Die aufgespannte Ebene bezieht sich auf die Transportoberfläche des Doppelbandes. Mit dieser Ausführung ist auf einfache Weise zum einen ein sicheres Übernehmen der Fleischprodukte vom Doppelband und Halten der Fleischprodukte auf der Segmentkette gewährleistet, und zum anderen ein einfacher Aufbau der Segmente und damit der Segmentkette geschaffen.

In einer bevorzugten Ausführungsform weisen die Segmente der Segmentkette im Bereich der Spitze der Stützabschnitte mindestens teilweise dornartige Vorsprünge zum Fixieren der zu transportierenden Fleischprodukte auf. Dadurch ist eine zusätzliche Fixierung der Fleischprodukte auf der Segmentkette gewährleistet, wodurch die Fleischprodukte gegen ein Verrutschen auf der Segmentkette gesichert und positionsgenau transportierbar sind. Ein weiterer vorteilhafter Effekt der dornartigen Vorsprünge besteht darin, dass das Abknicken der Teilfilets zu beiden Seiten der im Querschnitt dreieckförmigen oder genauer dachförmigen Segmentkette, also das Aufklappen der filetartigen Fleischprodukte, unterstützt wird.

Vorzugsweise sind der Segmentkette in Transportrichtung T hinter dem Doppelband mindestens entlang eines Teils des Transportpfads Niederhalter zugeordnet, wobei die Niederhalter zu beiden Seiten der Segmentkette angeordnet sind und sich beabstandet zur Segmentkette parallel zu dieser erstrecken. Mittels der Niederhalter sind die Fleischprodukte bzw. die zu beiden Seiten aufgeklappten Teilfilets zu beiden Seiten der Segmentkette zwischen Niederhalter und Segmentkette fixierbar. Durch den Transport der filetartigen Fleischprodukte in Transportrichtung T fädeln die Fleischprodukte bzw. die zu beiden Seiten von der Segmentkette herabhängenden Teilfilets zwischen der Segmentkette, die von unten stützt, und dem Niederhalter, der von oben hält, ein, wodurch die Teilfilets beim Bearbeiten sicher und präzise gehalten werden. Die Niederhalter bilden somit letztlich zusammen mit der Segmentkette ein Mittel zum Aufklappen bzw. unterstützen die Segmentkette zumindest beim Vorgang des Aufklappens, da sie die Teilfilets zuverlässig in der aufgespreizten Stellung halten.

Besonders bevorzugt sind die Niederhalter als umlaufend angetriebene Förderbänder mit einem Führungstrum und einem Rückführtrum ausgebildet, wobei Führungsflächen des Führungstrums parallel zu Stützflächen der Stützabschnitte der Segmente der Segmentkette ausgerichtet sind. Damit wird das Fixieren bzw. das in Position halten der Teilfilets während des Transports entlang des Transportpfads optimiert.

Eine vorteilhafte Ausgestaltung der Fördereinheit ist dadurch gekennzeichnet, dass der Spalt des Doppelbandes mindestens teilweise durch ein Abdeckelement abgedeckt ist, wobei das Abdeckelement mindestens im Übergangsbereich einen Spalt aufweist, der quer zur Transportrichtung T eine geringere Breite aufweist als der Spalt des Doppelbandes. Durch das Abdeckelement wird der für das Eintauchen der Segmentkette notwendige Spalt in Bereichen, in denen die Segmentkette nicht eintaucht, abgedeckt, so dass die Auflagefläche für die filetartigen Fleischprodukte vergrößert und ein Durchhängen der Fleischprodukte verhindert wird.

Vorteilhafterweise sind beide Förderelemente bzw. deren Antriebsmittel mit einer Steuerungseinrichtung verbunden. Dadurch können die Antriebsgeschwindigkeiten der beiden Förderelemente aufeinander und ggf. auf entlang des Transportpfads angeordnete Bearbeitungsstationen abgestimmt werden.

Die Aufgabe wird auch durch ein Verfahren mit den eingangs genannten Schritten dadurch gelöst, dass die Fleischprodukte auf einem Doppelband mit einem mittig und parallel zur Transportrichtung T verlaufenden Spalt als erstem Förderelement transportiert und in dem Übergangsbereich von einer im Querschnitt dreieckförmigen Segmentkette als zweitem Förderelement übernommen werden, wobei die Fleischprodukte von der Segmentkette weitertransportiert werden.

Vorzugsweise werden die Fleischprodukte mindestens im Übergangsbereich zeitgleich sowohl vom Doppelband als auch von der Segmentkette transportiert.

In einer vorteilhaften Weiterbildung werden die Fleischprodukte flach auf dem Doppelband liegend entlang einer durchgängig ebenen und horizontalen Transportfläche transportiert, während die Fleischprodukte auf der Segmentkette in abgewinkelter Position entlang einer abgewinkelten Transportfläche mit zu beiden Seiten der Segmentkette seitlich und nach unten abfallenden Transportteilflächen transportiert werden.

Besonders bevorzugt wird das Verfahren mit einer Fördereinheit nach einem oder mehreren der Ansprüche 1 bis 11 ausgeführt.

Die sich daraus ergebenden Vorteile wurden bereits im Zusammenhang mit der Fördereinheit beschrieben, weshalb zur Vermeidung von Wiederholungen auf die entsprechenden Passagen verwiesen wird.

Weitere zweckmäßige und/oder vorteilhafte Merkmale und Weiterbildungen zur Fördereinheit sowie zum Verfahren ergeben sich aus den Unteransprüchen und der Beschreibung. Besonders bevorzugte Ausführungsformen der Fördereinheit sowie das Verfahren werden anhand der beigefügten Zeichnung näher erläutert. In der Zeichnung zeigt:
- Fig. 1: einen axialen Querschnitt durch ein Fischfilet mit einer Mittelgräte und der der Mittelgräte gegenüberliegenden Hautseite,
- Fig. 2: das Fischfilet gemäß Figur 1 ohne die Mittelgräte, mit der Hautseite auf einer Fördereinheit liegend,
- Fig. 3: eine schematische Darstellung einer Fördereinheit mit einem Doppelband als erstem Förderelement und einer Segmentkette mit Niederhaltern als zweitem Förderelement,
- Fig. 4: eine vergrößerte Darstellung des Doppelbandes mit dem Übergangsbereich zur Segmentkette, und
- Fig. 5: eine Schnittansicht durch eine Segmentkette, auf der ein aufgeklapptes Fischfilet liegt.

Die in der Zeichnung dargestellte Fördereinheit zeigt ein Förderelement zum Transportieren von Thunfischfilets. Die erfindungsgemäße Fördereinheit ist in gleicher Weise zum Transportieren anderer filetartiger Fleischprodukte, wie z.B. Hähnchenbrustfilets oder dergleichen ausgebildet und eingerichtet und entsprechend geeignet.

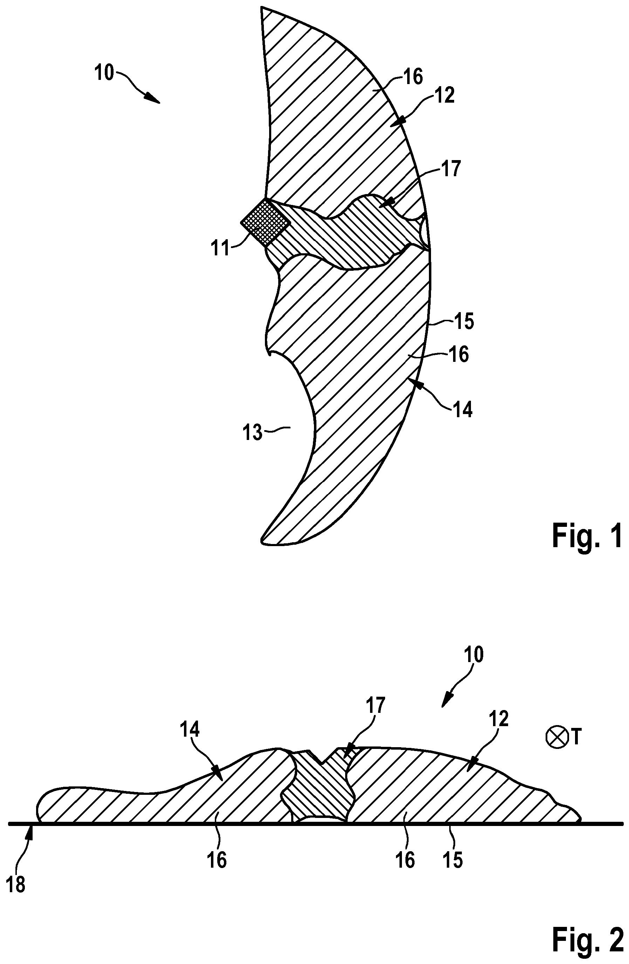

Zum besseren Verständnis der Notwendigkeit einer individuellen Positionierung der zu bearbeitenden Fleischprodukte auf der Fördereinheit wird anhand der Figuren 1 und 2 zunächst die Muskelstruktur eines Thunfisches bzw. dessen Fischfilets 10 sowie vergleichbarer Spezies erläutert. In der Figur 1 ist ein einzelnes Fischfilet 10 eines zwei Filets aufweisenden Thunfisches gezeigt. Das einzelne Fischfilet 10 umfasst in der Darstellung noch eine Mittelgräte 11. Ausgehend von der Mittelgräte 11 nach oben in Richtung einer nicht dargestellten Rückenflosse erstreckt sich das rückenseitige Teilfilet 12. Ausgehend von der Mittelgräte 11 nach unten in Richtung einer (nur angedeuteten) Bauchhöhle 13 erstreckt sich das bauchseitige Teilfilet 14. Auf der der Mittelgräte 11 entgegengesetzten Seite befindet sich die Hautseite 15 des Fischfilets 10. Das Fischfilet 10 besteht überwiegend aus "normalem", hellem Muskelfleisch 16. Ausgehend von der Mittelgräte 11 in Richtung der Hautseite 15 erstreckt sich jedoch ein teilweise asymmetrischer Streifen 17 Rotfleisch. Dieser Streifen 17 weist für jedes Fischfilet 10 eine individuelle Ausbreitung innerhalb des Muskelfleisches 16 auf.

In der Figur 2 ist das Fischfilet 10 gemäß Figur 1 ohne die Mittelgräte 11 dargestellt, wobei das Fischfilet 10 auf der Hautseite 15 liegt. Dadurch weist der Streifen 17 aus Rotfleisch nach oben, wobei der Streifen 17 in Längsrichtung des Fischfilets 10 im Wesentlichen in Transportrichtung T ausgerichtet ist. Der Streifen 17 erstreckt sich quer zur Transportrichtung T in den Bereich der beiden Teilfilets 12, 14.

Die dargestellte Fördereinheit 18 ist zum automatischen Fördern von filetartigen Fleischprodukten, insbesondere von Fischfilets 10 ausgebildet und eingerichtet, mit einem ersten, mittels eines Antriebsmittels umlaufend angetriebenen Förderelement 19 und einem in Transportrichtung T der zu fördernden Fleischprodukte dem ersten Förderelement 19 nachgeordneten zweiten, mittels eines Antriebsmittels umlaufend angetriebenen Förderelement 20, wobei die beiden Förderelemente 19, 20 einen durchgängigen Transportpfad bilden, entlang dem unterschiedliche Bearbeitungsstationen angeordnet sein können. Die Förderelemente 19, 20 sind um nicht explizit dargestellte Umlenk- und/oder Antriebselemente geführt.

Diese Fördereinheit 18 zeichnet sich erfindungsgemäß dadurch aus, dass das erste Förderelement 19 als ein Doppelband 21 mit einem mittig und parallel zur Transportrichtung T verlaufenden Spalt 22 ausgebildet ist, während das zweite Förderelement 20 als eine im Querschnitt dreieckförmige Segmentkette 23 ausgebildet ist. Das Doppelband 21 weist als zentrale Hauptfunktion das Transportieren flach in einer Ebene auf dem Doppelband liegender filetartiger Fleischprodukte auf und ist entsprechend eben ausgebildet. Durch den Spalt 22 wird das Eingreifen von Bearbeitungsstationen und/oder von weiteren Fördermitteln ermöglicht. Die Segmentkette 23 weist eine Doppelfunktion auf, nämlich einerseits das Aufklappen der zu transportierenden Fleischprodukte und andererseits das Transportieren der aufgeklappten Fleischprodukte in einer abgewinkelten Position, und ist entsprechend im Profil abgewinkelt ausgebildet.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Fördereinheit 18 weiterbilden können.

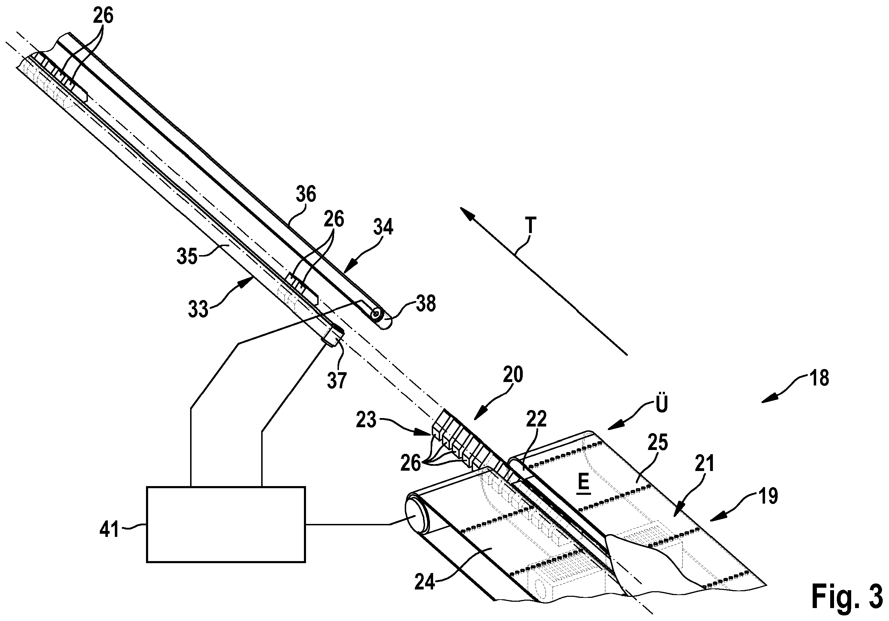

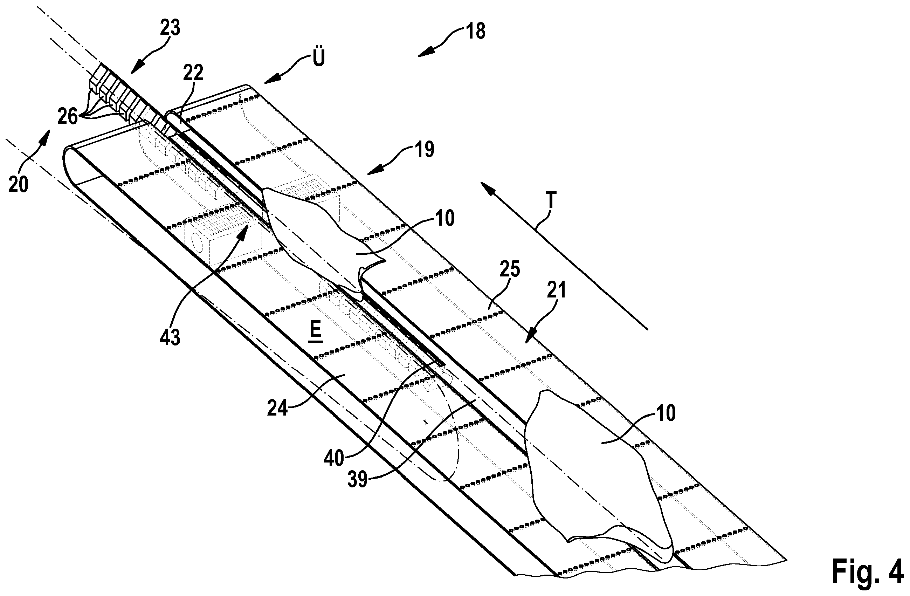

Wie erwähnt, bilden die beiden Förderelemente 19, 20 einen durchgängigen Transportpfad, so dass die filetartigen Fleischprodukte kontinuierlich transportierbar sind. Die Förderelemente 19, 20 können in Transportrichtung T quasi abstandslos unmittelbar aufeinanderfolgen. Bevorzugt überlappen sich das Doppelband 21 und die Segmentkette 23 in einem Übergangsbereich Ü, derart, dass die zu transportierenden Fleischprodukte temporär zeitglich mit beiden Förderelementen 19, 20 in Kontakt stehen können. Insbesondere in den Figuren 3 und 4 ist zu erkennen, dass in Transportrichtung T das zweite Förderelement 20 bereits beginnt, während das erste Förderelement 19 noch nicht ausgelaufen ist. Die Länge des Übergangsbereichs Ü ist variabel.

Das Doppelband 21 und die Segmentkette 23 bilden in Transportrichtung T eine im Wesentlichen horizontal verlaufende, durchgängige Fördereinheit 18, wobei die Segmentkette 23 zur Übernahme der zu transportierenden Fleischprodukte vom Doppelband 21 mindestens im Übergangsbereich Ü vom Doppelband 21 zur Segmentkette 23 von unten durch den Spalt 22 in das Doppelband 21 greift. Das Eingreifen kann bedeuten, dass sich die Segmentkette 23 mindestens abschnittsweise in dem Spalt 22 befindet, ohne dass die Segmentkette 23 über die durch das Doppelband 21 gebildete Transportfläche hinausragt. Optional kann die Segmentkette 23 auch partiell aus der bzw. über die Transportfläche hinausragen.

Das Doppelband 21 umfasst vorzugsweise zwei beabstandet zueinander angeordnete Teilbänder 24, 25, die jeweils ein Transporttrum und eine Rückführtrum aufweisen, wobei die beiden Transporttrums mit ihrer jeweils nach oben weisenden Transportseite eine durchgängig ebene und horizontale Transportfläche bilden, so dass die Fleischprodukte flach auf der Transportfläche liegen und so transportiert werden können. Die Teilbänder 24, 25 können völlig getrennt voneinander mit separaten Führungs- und/oder Antriebselementen geführt und angetrieben sein. In anderen Ausführungsformen können die Teilbänder 24, 25 beabstandet zueinander auf denselben Führungs- und Antriebselementen angeordnet sein. Der Spalt 22 kann sich über einen Teil der Länge des Doppelbandes 21 oder über die gesamte Länge des Doppelbandes 21 erstrecken, wobei der in Transportrichtung T ausgerichtete Spalt 22 in allen bevorzugten Ausführungsformen mittig angeordnet ist, derart, dass der Spalt 22 das Doppelband 21 symmetrisch teilt.

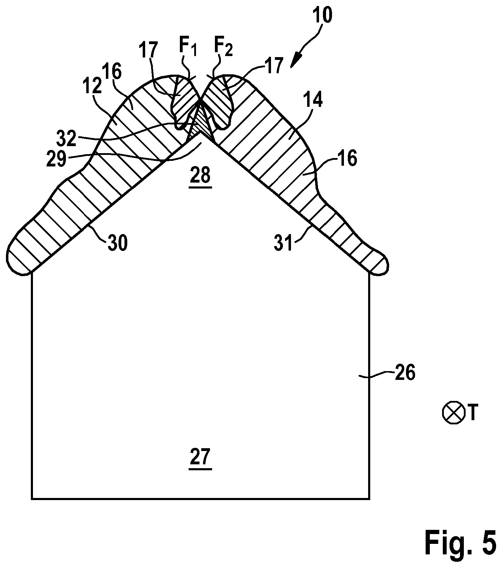

Die Segmentkette 23 umfasst einen Transporttrum und einen Rückführtrum und ist aus einer Vielzahl einzelner Segmente 26 gebildet, wobei jedes Segment 26 einen Grundabschnitt 27 und einen dachförmigen Stützabschnitt 28 aufweist, so dass die Segmentkette 23 mit dem Transporttrum ausgehend von einer Spitze 29 der dachförmigen Stützabschnitte 28 eine abgewinkelte Transportfläche mit zu beiden Seiten der Segmentkette 23 seitlich und nach unten abfallenden Transportteilflächen 30, 31 bildet. Ein solches Segment 26 ist im Detail in Figur 5 dargestellt. Jedes Segment 26 ist im Querschnitt dreieckförmig bzw. dachförmig ausgebildet. Es ist bevorzugt, dass Grundabschnitt 27 und Stützabschnitt 28 einstückig miteinander verbunden sind, wobei die Stützabschnitte 28 im Transporttrum nach oben in Richtung des Spaltes 22 des Doppelbandes 21 weisen und mit ihrer Spitze 29 mindestens teilweise durch den Spalt 22 über die durch das Doppelband aufgespannte Ebene E, also die Transportfläche hinausragen.

Die Segmente 26 der Segmentkette 23 weisen vorzugsweise im Bereich der Spitze 29 der Stützabschnitte 28 mindestens teilweise dornartige Vorsprünge 32 zum Fixieren der zu transportierenden Fleischprodukte auf. Solche Vorsprünge 32, so genannte Spikes, können auf ausgewählten Segmenten 26 oder jedem Segment 26 angeordnet bzw. ausgebildet sein. Jeder Vorsprung 32 kann auch nur eine angeraute Oberfläche oder jedes andere Mittel zum Halten oder Eindringen in das Fleischprodukte sein.

In einer bevorzugten Ausführungsform sind der Segmentkette 23 in Transportrichtung T hinter dem Doppelband 21 mindestens entlang eines Teils des Transportpfads Niederhalter 33, 34 zugeordnet, wobei die Niederhalter 33, 34 zu beiden Seiten der Segmentkette 23 angeordnet sind und sich beabstandet zur Segmentkette 23 parallel zu dieser erstrecken. Die Niederhalter 33, 34 können z.B. einfache Rundprofile sein. Bevorzugt sind die Niederhalter 33, 34 als umlaufend angetriebene Förderbänder 35, 36 mit einem Führungstrum und einem Rückführtrum ausgebildet, wobei Führungsflächen 37, 38 des Führungstrums parallel zu Stützflächen bzw. den Transportteilflächen 30, 31 der Stützabschnitte 28 der Segmente 26 der Segmentkette 23 ausgerichtet sind. Der Abstand der Führungsflächen 37, 38 zu den Transportteilflächen 30, 31 der Segmente 26 ist einstellbar. Die Niederhalter 33, 34 sind vorzugsweise zur Unterstützung der Segmentkette 23 als aktives Mittel zum Unterstützen des Aufklappens der Teilfilets 12, 14 ausgebildet und eingerichtet und halten die Teilfilets 12, 14 in einer aufgespreizten Stellung.

Der Spalt 22 des Doppelbandes 21 kann durchgängig offen sein. Vorzugsweise ist der Spalt 22 des Doppelbandes 21 mindestens teilweise durch ein Abdeckelement 39 abgedeckt, wobei das Abdeckelement 39 mindestens im Übergangsbereich Ü einen Spalt 40 aufweist, der quer zur Transportrichtung T eine geringere Breite aufweist als der Spalt 22 des Doppelbandes 21. Das Abdeckelement 39 ist vorzugsweise ein einfaches Abdeckblech, das reibungsarm oder reibungsfrei zu den Teilbändern 24, 25 zwischen den Teilbändern 24, 25 angeordnet und befestigt ist.

Der Spalt 40 im Abdeckelement 39 im Überlappungsbereich Ü ermöglicht es, dass die Segmentkette 23 zumindest mit ihren nach oben gerichteten Spitzen 29 und/oder Vorsprüngen 32 der einzelnen Segmente 26 durch den Spalt 22 des Doppelbandes 21 und den Spalt 40 des Abdeckelementes 39 über die von dem Doppelband 21 aufgespannten Ebene E (bezogen auf die Oberfläche des Doppelbandes 21) hinausragen kann. In anderen Ausführungsbeispielen kann die Segmentkette 23 selbst mit ihren Spitzen 29 und/oder Vorsprüngen 32 in oder unterhalb der vom Doppelband 21 aufgespannten Ebene E in dem Spalt 22, 40 liegen.

Vorzugsweise sind beide Förderelemente 19, 20 bzw. deren Antriebsmittel mit einer Steuerungseinrichtung 41 verbunden. Die Steuerungseinrichtung 41 kann als speicherprogrammierbare Steuerung oder als mikroprozessorbasierte Steuerung ausgebildet sein und umfasst optional mindestens eine Speichereinheit sowie mindestens ein Steuermodul zum aktiven Steuern.

Im Folgenden wird das Verfahren anhand der Zeichnung näher erläutert:
Das Verfahren dient zum automatischen Fördern von filetartigen Fleischprodukten, insbesondere von Fischfilets. Die Fleischprodukte werden mittels eines ersten Förderelementes 19 in Transportrichtung T entlang eines Transportpfads transportiert. In einem Übergangsbereich Ü werden die Fleischprodukte an ein zweites Förderelement 20 übergeben. Mittels des zweiten Förderelementes 20 werden die Fleischprodukte in Transportrichtung T entlang des Transportpfads transportiert.

Dieses Verfahren zeichnet sich erfindungsgemäß dadurch aus, dass die Fleischprodukte auf einem Doppelband 21 mit einem mittig und parallel zur Transportrichtung T verlaufenden Spalt 22 als erstem Förderelement 19 transportiert und in dem Übergangsbereich Ü von einer im Querschnitt dreieckförmigen Segmentkette 23 als zweitem Förderelement 20 übernommen werden, wobei die Fleischprodukte von der Segmentkette 23 weitertransportiert werden.

Vorzugsweise werden die Fleischprodukte flach auf dem Doppelband 21 liegend entlang einer durchgängig ebenen und horizontalen Transportfläche in der Ebene E transportiert, während die Fleischprodukte auf der Segmentkette 23 in abgewinkelter Position entlang einer abgewinkelten Transportfläche mit zu beiden Seiten der Segmentkette 23 seitlich und nach unten abfallenden Transportteilflächen 30, 31 transportiert werden. Auf dem Doppelband 21 werden die Fleischprodukte auf einer ebenen und im Wesentlichen horizontalen Transportfläche - mit Ausnahme des Bereiches des Spaltes 22 - flächig gestützt und transportiert. Mit Übernahme der Fleischprodukte von der Segmentkette 23 klappt das Fleischprodukt durch die konstruktive Ausbildung der Segmentkette 23 nach dem Verlassen des Doppelbandes 21 - vorzugsweise alleine durch Schwerkraft - automatisch auf, indem die beiden Teilfilets 12, 14 seitlich und nach unten klappen. Das Aufklappen der Teilfilets 12, 14 kann auch aktiv unterstützt werden. Der Weitertransport der Fleischprodukte erfolgt dann auf einer abgewinkelten Transportfläche, so dass Bereiche, die auf der horizontalen Transportfläche des Doppelbandes 21 noch einander zugekehrt waren, nunmehr nach oben bzw. zumindest schräg nach oben gerichtet sind.

Besonders deutlich zeigt sich dieser Effekt, wenn bereits bearbeitete Fleischprodukte, beispielsweise Thunfischfilets, bei denen ein mittlerer, zentraler Teilstreifen des Rotfleisches aus dem Fischfilet 11 entfernt wurde, auf der Segmentkette 23 transportiert werden. Dann weisen die beim Entfernen des mittleren, zentralen Teilstreifens gebildeten Schnittflächen F₁, F₂ eines bauchseitigen und noch am Fischfilet 10 befindlichen Teilstreifens des Rotfleisches und eines rückenseitigen und noch am Fischfilet 10 hängenden Teilstreifens des Rotfleisches von der Fördereinheit 18 weg nach oben.

Vorzugsweise werden die Fleischprodukte mindestens im Übergangsbereich Ü zeitgleich sowohl vom Doppelband 21 als auch von der Segmentkette 23 transportiert. Anders ausgedrückt erfolgt eine "fliegende" Übergabe, indem das vorauslaufende Ende des Fleischproduktes bereits von der Segmentkette 23 transportiert wird, während ein nachlaufendes Ende des Fleischproduktes noch vom Doppelband 21 transportiert wird.

Besonders bevorzugt wird das Verfahren mit einer Fördereinheit 18 nach einem oder mehreren der Ansprüche 1 bis 11 ausgeführt.

## Patentansprüche

1. Fördereinheit (18), ausgebildet und eingerichtet zum automatischen Fördern von filetartigen Fleischprodukten, insbesondere von Fischfilets (10), mit einem ersten, mittels eines Antriebsmittels umlaufend angetriebenen Förderelement (19) und einem in Transportrichtung (T) der zu fördernden Fleischprodukte dem ersten Förderelement (19) nachgeordneten zweiten, mittels eines Antriebsmittels umlaufend angetriebenen Förderelement (20), wobei die beiden Förderelemente (19, 20) einen durchgängigen Transportpfad bilden, entlang dem unterschiedliche Bearbeitungsstationen angeordnet sein können, wobei das erste Förderelement (19) als ein Doppelband (21) mit einem mittig und parallel zur Transportrichtung (T) verlaufenden Spalt (22) ausgebildet ist, während das zweite Förderelement (20) als eine im Querschnitt dreieckförmige Segmentkette (23) ausgebildet ist.

2. Fördereinheit (18) nach Anspruch 1, **dadurch gekennzeichnet, dass** sich das Doppelband (21) und die Segmentkette (23) in einem Übergangsbereich (Ü) überlappen, derart, dass die zu transportierenden Fleischprodukte temporär zeitglich mit beiden Förderelementen (19, 20) in Kontakt stehen.

3. Fördereinheit (18) nach Anspruch 1 oder 2, **dadurch gekennzeichnet, dass** das Doppelband (21) und die Segmentkette (23) in Transportrichtung (T) eine im Wesentlichen horizontal verlaufende, durchgängige Fördereinheit (18) bilden, wobei die Segmentkette (23) zur Übernahme der zu transportierenden Fleischprodukte vom Doppelband (21) mindestens im Übergangsbereich (Ü) vom Doppelband (21) zur Segmentkette (23) von unten durch den Spalt (22) in das Doppelband (21) greift.

4. Fördereinheit (18) nach einem oder mehreren der Ansprüche 1 bis 3, **dadurch gekennzeichnet, dass** das Doppelband (21) zwei beabstandet zueinander angeordnete Teilbänder (24, 25) umfasst, die jeweils ein Transporttrum und eine Rückführtrum aufweisen, wobei die beiden Transporttrums mit ihrer jeweils nach oben weisenden Transportseite eine durchgängig ebene und horizontale Transportfläche bilden.

5. Fördereinheit (18) nach einem oder mehreren der Ansprüche 1 bis 4, **dadurch gekennzeichnet, dass** die Segmentkette (23) einen Transporttrum und einen Rückführtrum umfasst und aus einer Vielzahl einzelner Segmente (26) gebildet ist, wobei jedes Segment (26) einen Grundabschnitt (27) und einen dachförmigen Stützabschnitt (28) aufweist, so dass die Segmentkette (23) mit dem Transporttrum ausgehend von einer Spitze (29) der dachförmigen Stützabschnitte (28) eine abgewinkelte Transportfläche mit zu beiden Seiten der Segmentkette (23) seitlich und nach unten abfallenden Transportteilflächen (30, 31) bildet.

6. Fördereinheit (18) nach Anspruch 5, **dadurch gekennzeichnet, dass** Grundabschnitt (27) und Stützabschnitt (28) einstückig miteinander verbunden sind, wobei die Stützabschnitte (28) im Transporttrum nach oben in Richtung des Spaltes (22) des Doppelbandes (21) weisen und mit ihrer Spitze (29) mindestens teilweise durch den Spalt (22) über die durch das Doppelband (21) aufgespannte Ebene (E), also die Transportfläche hinausragen.

7. Fördereinheit (18) nach Anspruch 5 oder 6, **dadurch gekennzeichnet, dass** die Segmente (26) der Segmentkette (23) im Bereich der Spitze (29) der Stützabschnitte mindestens teilweise dornartige Vorsprünge (32) zum Fixieren der zu transportierenden Fleischprodukte aufweisen.

8. Fördereinheit (18) nach einem oder mehreren der Ansprüche 1 bis 7, **dadurch gekennzeichnet, dass** der Segmentkette (23) in Transportrichtung (T) hinter dem Doppelband (21) mindestens entlang eines Teils des Transportpfads Niederhalter (33, 34) zugeordnet sind, wobei die Niederhalter (33, 34) zu beiden Seiten der Segmentkette (23) angeordnet sind und sich beabstandet zur Segmentkette (23) parallel zu dieser erstrecken.

9. Fördereinheit (18) nach Anspruch 8, **dadurch gekennzeichnet, dass** die Niederhalter (33, 34) als umlaufend angetriebene Förderbänder (35, 36) mit einem Führungstrum und einem Rückführtrum ausgebildet sind, wobei Führungsflächen (37, 38) des Führungstrums parallel zu Stützflächen der Stützabschnitte (28) der Segmente (26) der Segmentkette (23) ausgerichtet sind.

10. Fördereinheit (18) nach einem oder mehreren der Ansprüche 1 bis 9, **dadurch gekennzeichnet, dass** der Spalt (22) des Doppelbandes (21) mindestens teilweise durch ein Abdeckelement (39) abgedeckt ist, wobei das Abdeckelement (39) mindestens im Übergangsbereich (Ü) einen Spalt (40) aufweist, der quer zur Transportrichtung (T) eine geringere Breite aufweist als der Spalt (22) des Doppelbandes (21).

11. Fördereinheit (18) nach einem oder mehreren der Ansprüche 1 bis 10, **dadurch gekennzeichnet, dass** beide Förderelemente (19, 20) bzw. deren Antriebsmittel mit einer Steuerungseinrichtung (41) verbunden sind.

12. Verfahren zum automatischen Fördern von filetartigen Fleischprodukten, insbesondere von Fischfilets (11), umfassend die Schritte:
- Transportieren der Fleischprodukte mittels eines ersten Förderelementes (19) in Transportrichtung (T) entlang eines Transportpfads,
- Übergeben der Fleischprodukte an ein zweites Förderelement (20) in einem Übergangsbereich (Ü), und
- Transportieren der Fleischprodukte mittels des zweiten Förderelementes (20) in Transportrichtung (T) entlang des Transportpfads,
wobei die Fleischprodukte auf einem Doppelband (21) mit einem mittig und parallel zur Transportrichtung (T) verlaufenden Spalt (22) als erstem Förderelement (19) transportiert und in dem Übergangsbereich (Ü) von einer im Querschnitt dreieckförmigen Segmentkette (23) als zweitem Förderelement (20) übernommen werden, wobei die Fleischprodukte von der Segmentkette (23) weitertransportiert werden.

13. Verfahren nach Anspruch 12, **dadurch gekennzeichnet, dass** die Fleischprodukte mindestens im Übergangsbereich (Ü) zeitgleich sowohl vom Doppelband (21) als auch von der Segmentkette (23) transportiert werden.

14. Verfahren nach Anspruch 12 oder 13, **dadurch gekennzeichnet, dass** die Fleischprodukte flach auf dem Doppelband (21) liegend entlang einer durchgängig ebenen und horizontalen Transportfläche transportiert werden, während die Fleischprodukte auf der Segmentkette (23) in abgewinkelter Position entlang einer abgewinkelten Transportfläche mit zu beiden Seiten der Segmentkette (23) seitlich und nach unten abfallenden Transportteilflächen (30, 31) transportiert werden.

15. Verfahren nach einem oder mehreren der Ansprüche 12 bis 14, **dadurch gekennzeichnet, dass** es mit einer Fördereinheit (18) nach einem oder mehreren der Ansprüche 1 bis 11 ausgeführt wird.

## Claims

1. Conveying unit (18), designed and configured for automatically conveying fillet-like meat products, in particular fish fillets (10), with a first conveying element (19) rotationally driven by a drive means and a second conveying element (20), rotationally driven by a drive means in transport direction (T) of the meat products to be conveyed, which is downstream of the first conveying element (19), wherein the two conveying elements (19, 20) form a continuous transport path, along which different processing stations may be arranged, wherein the first conveying element (19) is designed as a double belt (21) with a gap (22) running centrally and parallel to the transport direction (T), while the second conveying element (20) is designed as a segment chain (23) which is triangular in cross-section.

2. Conveying unit (18) according to claim 1, **characterised in that** the double belt (21) and the segment chain (23) overlap in a transition region (Ü), in such a manner that the meat products to be transported are temporarily in contact with both conveying elements (19, 20) at the same time.

3. Conveying unit (18) according to claim 1 or 2, **characterised in that** the double belt (21) and the segment chain (23) form a continuous conveying unit (18) running substantially horizontally in transport direction (T), wherein the segment chain (23) engages in the double belt (21) from below through the gap (22), at least in the transition region (Ü) from double belt (21) to the segment chain (23), for transferring the meat products to be transported from the double belt (21).

4. Conveying unit (18) according to one or more of claims 1 to 3, **characterised in that** the double belt (21) comprises two partial belts (24, 25) arranged at a distance from each other, each of which has a transport run and a return run, wherein the two transport runs form a continuously level and horizontal transport surface with their transport side directed upwards in each case.

5. Conveying unit (18) according to one or more of claims 1 to 4, **characterised in that** the segment chain (23) comprises a transport run and a return run and is formed from a plurality of individual segments (26), wherein each segment (26) has a base section (27) and a roof-shaped support section (28), such that the segment chain (23) with the transport run, starting from a tip (29) of the roof-shaped support sections (28), forms an angled transport surface with transport partial surfaces (30, 31) sloping laterally and downwards on both sides of the segment chain (23).

6. Conveying unit (18) according to claim 5, **characterised in that** the base section (27) and support section (28) are integrally connected to each other, wherein the support sections (28) point upwards in the transport run in the direction of the gap (22) of the double belt (21) and protrude with their tip (29) at least partially through the gap (22) beyond the plane (E), i.e. the transport surface, defined by the double belt (21).

7. Conveying unit (18) according to claim 5 or 6, **characterised in that** the segments (26) of the segment chain (23) have at least in part spike-like protrusions (32) in the region of the tip (29) of the support sections for fastening the meat products to be transported.

8. Conveying unit (18) according to one or more of claims 1 to 7, **characterised in that** devices for holding the fish down (33, 34) are assigned to the segment chain (23) downstream of the double belt (21) in transport direction (T) at least along a portion of the transport path, wherein the devices for holding the fish down (33, 34) are arranged on both sides of the segment chain (23) and extend at a distance from the segment chain (23) and parallel thereto.

9. Conveying unit (18) according to claim 8, **characterised in that** the devices for holding the fish down (33, 34) are designed as rotationally driven conveyor belts (35, 36) with a guide run and a return run, wherein guiding surfaces (37, 38) of the guide run are aligned parallel to support surfaces of the support sections (28) of the segments (26) of the segment chain (23).

10. Conveying unit (18) according to one or more of claims 1 to 9, **characterised in that** the gap (22) of the double belt (21) is covered at least partially by a cover element (39), wherein the cover element (39) comprises a gap (40) at least in the transition region (Ü), which gap has a smaller width transverse to the transport direction (T) than the gap (22) of the double belt (21).

11. Conveying unit (18) according to one or more of claims 1 to 10, **characterised in that** both conveying elements (19, 20) or their drive means are connected to a control device (41).

12. Method for automatically conveying fillet-like meat products, in particular fish fillets (11), comprising the steps:
- Transporting the meat products by means of a first conveying element (19) along a transport path in transport direction (T),
- Transferring the meat products to a second conveying element (20) in a transition region (Ü), and
- Transporting the meat products by means of the second conveying element (20) along the transport path in transport direction (T),
wherein the meat products are transported on a double belt (21) with a gap (22) running centrally and parallel to the transport direction (T) as the first conveying element (19) and are taken over in the transition region (Ü) by a segment chain (23), which is triangular in cross-section, as the second conveying element (20), wherein the meat products are transported onwards by the segment chain (23).

13. Method according to claim 12, **characterised in that** the meat products are transported at least in the transition region (Ü) by both the double belt (21) and the segment chain (23) at the same time.

14. Method according to claim 12 or 13, **characterised in that** the meat products are transported lying flat on the double belt (21) along a continuously level and horizontal transport surface, while the meat products on the segment chain (23) are transported in an angled position along an angled transport surface with transport partial surfaces (30, 31) sloping laterally and downwards on both sides of the segment chain (23).

15. Method according to one or more of claims 12 to 14, **characterised in that** said method is carried out with a conveying unit (18) according to one or more of claims 1 to 11.

## Revendications

1. Unité d'acheminement (18), configurée et adaptée pour l'acheminement automatique de produits carnés de type filets, notamment de filets de poisson (10), avec un premier élément d'acheminement (19) entraîné en rotation au moyen d'un moyen d'entraînement et un deuxième élément d'acheminement (20) agencé en aval du premier élément d'acheminement (19) dans la direction de transport (T) des produits carnés à acheminer, entraîné en rotation au moyen d'un moyen d'entraînement, les deux éléments d'acheminement (19, 20) formant un trajet de transport continu le long duquel peuvent être agencés différents postes de traitement, le premier élément d'acheminement (19) étant configuré sous la forme d'une double bande (21) avec une fente (22) s'étendant au milieu et parallèlement à la direction de transport (T), tandis que le deuxième élément d'acheminement (20) est configuré sous la forme d'une chaîne de segments (23) de forme triangulaire dans la section transversale.

2. Unité d'acheminement (18) selon la revendication 1, **caractérisée en ce que** la double bande (21) et la chaîne de segments (23) se chevauchent dans une zone de transition (Ü), de telle sorte que les produits carnés à transporter sont temporairement simultanément en contact avec les deux éléments d'acheminement (19, 20).

3. Unité d'acheminement (18) selon la revendication 1 ou 2, **caractérisée en ce que** la double bande (21) et la chaîne de segments (23) forment une unité d'acheminement (18) continue s'étendant essentiellement horizontalement dans la direction de transport (T), la chaîne de segments (23) s'engageant dans la double bande (21) par le bas à travers la fente (22) pour prendre en charge les produits carnés à transporter depuis la double bande (21) au moins dans la zone de transition (Ü) entre la double bande (21) et la chaîne de segments (23).

4. Unité d'acheminement (18) selon une ou plusieurs des revendications 1 à 3, **caractérisée en ce que** la double bande (21) comprend deux bandes partielles (24, 25) agencées à distance l'une de l'autre, qui présentent chacune un brin de transport et un brin de retour, les deux brins de transport formant avec leur côté de transport respectif orienté vers le haut une surface de transport plane et horizontale continue.

5. Unité d'acheminement (18) selon une ou plusieurs des revendications 1 à 4, **caractérisée en ce que** la chaîne de segments (23) comprend un brin de transport et un brin de retour et est formée d'une pluralité de segments individuels (26), chaque segment (26) présentant une section de base (27) et une section d'appui (28) en forme de toit, de telle sorte que la chaîne de segments (23) forme avec le brin de transport, en partant d'une pointe (29) des sections d'appui (28) en forme de toit, une surface de transport coudée avec des surfaces partielles de transport (30, 31) descendant latéralement et vers le bas des deux côtés de la chaîne de segments (23).

6. Unité d'acheminement (18) selon la revendication 5, **caractérisée en ce que** la section de base (27) et la section d'appui (28) sont reliées l'une à l'autre d'un seul tenant, les sections d'appui (28) étant dirigées vers le haut dans le brin de transport en direction de la fente (22) de la double bande (21) et dépassant par leur pointe (29) au moins partiellement à travers la fente (22) au-dessus du plan (E) défini par la double bande (21), c'est-à-dire la surface de transport.

7. Unité d'acheminement (18) selon la revendication 5 ou 6, **caractérisée en ce que** les segments (26) de la chaîne de segments (23) présentent au moins partiellement, dans la zone de la pointe (29) des sections d'appui, des saillies (32) en forme de mandrin pour la fixation des produits carnés à transporter.

8. Unité d'acheminement (18) selon une ou plusieurs des revendications 1 à 7, **caractérisée en ce que** des serre-flans (33, 34) sont associés à la chaîne de segments (23) après la double bande (21) dans la direction de transport (T), au moins le long d'une partie du trajet de transport, les serre-flans (33, 34) étant agencés des deux côtés de la chaîne de segments (23) et s'étendant à distance de la chaîne de segments (23), parallèlement à celle-ci.

9. Unité d'acheminement (18) selon la revendication 8, **caractérisée en ce que** les serre-flans (33, 34) sont configurés sous forme de bandes d'acheminement (35, 36) entraînées en rotation, avec un brin de guidage et un brin de retour, des surfaces de guidage (37, 38) du brin de guidage étant orientées parallèlement à des surfaces d'appui des sections d'appui (28) des segments (26) de la chaîne de segments (23).

10. Unité d'acheminement (18) selon une ou plusieurs des revendications 1 à 9, **caractérisée en ce que** la fente (22) de la double bande (21) est au moins partiellement recouverte par un élément de recouvrement (39), l'élément de recouvrement (39) présentant, au moins dans la zone de transition (Ü), une fente (40) qui présente, transversalement à la direction de transport (T), une largeur inférieure à la fente (22) de la double bande (21).

11. Unité d'acheminement (18) selon une ou plusieurs des revendications 1 à 10, **caractérisée en ce que** les deux éléments d'acheminement (19, 20) ou leurs moyens d'entraînement sont reliés à un dispositif de commande (41).

12. Procédé d'acheminement automatique de produits carnés de type filets, notamment de filets de poisson (11), comprenant les étapes :
- le transport des produits carnés au moyen d'un premier élément d'acheminement (19) dans la direction de transport (T) le long d'un trajet de transport,
- le transfert des produits carnés à un deuxième élément d'acheminement (20) dans une zone de transition (Ü), et
- le transport des produits carnés au moyen du deuxième élément d'acheminement (20) dans la direction de transport (T) le long du trajet de transport,
les produits carnés étant transportés sur une double bande (21) avec une fente (22) s'étendant au centre et parallèlement à la direction de transport (T) en tant que premier élément d'acheminement (19) et étant pris en charge dans la zone de transition (Ü) par une chaîne de segments (23) de forme triangulaire dans la section transversale en tant que deuxième élément d'acheminement (20), les produits carnés étant transportés plus loin par la chaîne de segments (23).

13. Procédé selon la revendication 12, **caractérisé en ce que** les produits carnés sont transportés simultanément, au moins dans la zone de transition (Ü), à la fois par la double bande (21) et par la chaîne de segments (23).

14. Procédé selon la revendication 12 ou 13, **caractérisé en ce que** les produits carnés sont transportés à plat sur la double bande (21) allongés le long d'une surface de transport plane et horizontale continue, tandis que les produits carnés sont transportés sur la chaîne de segments (23) en position coudée le long d'une surface de transport coudée avec des surfaces partielles de transport (30, 31) descendant latéralement et vers le bas des deux côtés de la chaîne de segments (23).

15. Procédé selon une ou plusieurs des revendications 12 à 14, **caractérisé en ce qu'**il est mis en œuvre avec une unité d'acheminement (18) selon une ou plusieurs des revendications 1 à 11.
